# FASCICULE DE BREVET EUROPEEN

(11) **EP 1 987 503 B1**
(45) Date de publication et mention de la délivrance du brevet: **13.05.2009**
(21) Numéro de dépôt: 07730970.6
(22) Date de dépôt: 14.02.2007
(51) Int. Cl.: G08G 5/02, B64D 45/04, G05D 1/06

(54) **DISPOSITIF D`AIDE AU PILOTAGE D`UN AERONEF LORS D`UNE PHASE D`APPROCHE EN VUE D`UN ATTERRISSAGE**
VORRICHTUNG ZUR UNTERSTÜTZUNG DER FLUGZEUGLENKUNG IN DER LANDEANFLUGSPHASE ZUM LANDEN
DEVICE FOR AIDING THE PILOTING OF AN AIRCRAFT DURING AN APPROACH PHASE FOR THE PURPOSE OF LANDING

(30) Priorité: 20.02.2006 FR 0601453
(43) Date de publication de la demande: 05.11.2008
(73) Titulaire: AIRBUS France, 31060 Toulouse (FR)
(72) Inventeur: ROUQUETTE, Patrice, F-31450 Pompertuzat (FR); HUYNH, Jean-Philippe, F-31170 TOURNEFEUILLE (FR)
(74) Mandataire: Hauer, Bernard
(86) Numéro de dépôt international: PCT/FR2007/000258
(87) Numéro de publication internationale: WO 2007/096500

(56) Documents cités:
- EP-A- 1 460 504
- FR-A- 2 872 316
- US-A- 3 666 929

## Description

La présente invention concerne un dispositif d'aide au pilotage d'un aéronef, en particulier d'un avion de transport, lors d'une phase d'approche en vue d'un atterrissage.

Dans le cadre de la présente invention, ladite phase d'approche présente :
- une phase initiale définie entre un premier point (dit "point d'approche finale") et un second point (dit "point de transition"), pendant laquelle l'aéronef est guidé suivant un plan de vol prédéterminé en respectant des contraintes de performance, notamment de type RNP ("Required Navigation Performance" en anglais) ; et
- une phase terminale définie entre ce point de transition et l'atterrissage effectif sur une piste d'atterrissage, pendant laquelle l'aéronef est guidé suivant un axe d'approche.

On sait que, dans un contexte international où le trafic aérien ne cesse d'augmenter, on associe aux trajectoires des aéronefs des couloirs aériens, dont la largeur devient de plus en plus faible. Pour pouvoir réduire cette largeur de couloir aérien, on tient notamment compte de certaines performances desdits aéronefs. Ces dernières caractéristiques sont notamment mises en oeuvre durant ladite phase initiale de la phase d'approche entre ledit point d'approche finale et ledit point de transition.

On sait de plus que les performances qu'un aéronef doit tenir pour rester dans un tel couloir aérien, sont de deux types, à savoir :
- des performances de guidage : le but est de faire suivre à l'aéronef correctement un plan de vol, c'est-à-dire de minimiser une erreur de guidage (dénommée en anglais "Flight Technical Error" ou FTE) ; et
- des performances de navigation : le but est d'avoir une bonne estimation de la position effective de l'aéronef, c'est-à-dire de minimiser une erreur d'estimation de position ("Position Estimation Error" en anglais ou PEE).

Pour tenir les performances précédentes, il convient donc de minimiser la somme de ces deux erreurs FTE et PEE, à savoir une erreur totale qui est dénommée en anglais "Total System Error" ou TSE.

La tenue de ce paramètre TSE est l'une des conditions requises pour permettre en particulier :
- de faire voler l'aéronef suivant de nouveaux types d'approche, par rapport à des terrains contenant des obstacles ou présentant des restrictions d'atterrissage ;
- d'opérer des approches simultanées sur des pistes d'atterrissage proches les unes des autres ; et
- d'autoriser des minima de hauteur de décision d'atterrissage plus faibles.

Par conséquent, la prise en compte des performances de navigation et de guidage de type RNP, dans la phase initiale précitée (entre ledit point d'approche finale et ledit point de transition), permet d'abaisser les minima des hauteurs de décision, par rapport à une approche de non précision usuelle, mais ne permet pas de descendre sous une altitude prédéterminée, par exemple 250 pieds (environ 75 mètres), qui est relative audit point de transition.

A partir dudit point de transition, ladite phase terminale de la phase d'approche peut être mise en oeuvre, en guidant l'aéronef suivant un axe d'approche qui est conforme à une approche de précision aux instruments, par exemple de type ILS ("Instrument Landing System" en anglais), ou à une approche de non précision.

Toutefois, dans une telle situation, lors de la transition (audit point de transition) entre la phase initiale et la phase terminale, le changement de mode de guidage est généralement réalisé de façon plus ou moins brusque, notamment en ce qui concerne le guidage proprement dit, ainsi que pour la présentation d'informations correspondantes qui est fournie à l'équipage. Ceci présente en particulier les inconvénient suivants :
- inconfort pour les passagers et le pilote ;
- stress du pilote lors de réactions brusques de l'aéronef ; et
- lors de la phase initiale, absence d'informations pour le pilote lui permettant de situer l'aéronef par rapport à un axe d'approche xLS (précisé ci-dessous) et de vérifier la cohérence de la position de l'aéronef avec cet axe xLS.

La présente invention concerne un dispositif d'aide au pilotage d'un aéronef lors d'une phase d'approche en vue d'un atterrissage, qui permet de remédier aux inconvénients précités, ladite phase d'approche présentant :
- une phase initiale définie entre un premier point de transition et au moins un second point de transition, pendant laquelle l'aéronef est guidé suivant un plan de vol prédéterminé en respectant des contraintes de performance ; et
- une phase terminale définie entre ce second point de transition et l'atterrissage, pendant laquelle l'aéronef est guidé suivant un axe d'approche.

A cet effet, selon l'invention, ledit dispositif du type comportant :
- un ensemble de sources d'informations susceptibles de fournir des informations relatives à l'aéronef et notamment sa position courante ;
- une base de données de navigation ;
- un système de calcul susceptible de déterminer :
   ■ une trajectoire de vol relative audit plan de vol ;
   ■ des premières déviations latérales et verticales entre la position courante de l'aéronef et ladite trajectoire de vol ;
   ■ ledit axe d'approche ; et
   ■ des secondes déviations latérales et verticales entre la position courante de l'aéronef et ledit axe d'approche ;
- un système de guidage susceptible d'aider au guidage de l'aéronef ; et
- un système d'affichage,
est remarquable en ce que :
- ledit dispositif comporte, de plus, un système de commande comportant au moins un moyen de commande actionnable, permettant à un pilote de l'aéronef de commander (à savoir armer ou engager en fonction du mode de réalisation) un mode d'approche mixte comprenant un premier mode de guidage pour guider l'aéronef pendant ladite phase initiale et un second mode de guidage pour guider l'aéronef pendant ladite phase terminale ;
- ledit système de calcul est formé de manière à déterminer, dès l'actionnement dudit moyen de commande, à la fois lesdites premières et secondes déviations, relatives audit mode d'approche mixte commandé, et ceci dès que toutes les informations nécessaires à cet effet sont disponibles à bord de l'aéronef ;
- ledit système de guidage est formé de manière à aider à guider l'aéronef, en cas d'actionnement dudit moyen de commande, à la fois pendant ladite phase initiale entre lesdits premier et second points de transition, conformément audit premier mode de guidage, et pendant ladite phase terminale à partir dudit second point de transition, conformément audit second mode de guidage, la transition entre lesdits premier et second modes de guidage étant réalisée automatiquement par ledit système de guidage ; et
- ledit système d'affichage est formé de manière à afficher, sur au moins un écran de visualisation, dès l'actionnement dudit moyen de commande, au moins :
   ■ un moyen d'indication indiquant ledit mode d'approche mixte commandé ;
   ■ un moyen d'indication indiquant le cas échéant au moins le mode de guidage courant dudit mode d'approche mixte commandé ; et
   ■ des moyens d'indication représentatifs respectivement desdites premières et secondes déviations, et ceci dès qu'elles sont disponibles.

Ainsi, grâce à l'invention :
- la transition entre les premier et second modes de guidage (c'est-à-dire entre les guidages relatifs respectivement auxdites phases initiale et terminale) est réalisée automatiquement par le système de guidage ; et
- l'équipage de l'aéronef est informé, dès la commande (armement ou engagement) d'un mode d'approche mixte, à la fois de cette commande, ainsi que des déviations relatives à la fois aux premier et second modes de guidage dudit mode d'approche mixte commandé.

Ceci permet d'obtenir une transition simple et efficace entre la phase initiale et la phase terminale de ladite phase d'approche.

De plus, l'équipage de l'aéronef est immédiatement informé des déviations latérales et verticales, non seulement dudit premier mode de guidage pour la phase initiale qui est mise en oeuvre à ce moment ou sera mise en oeuvre très rapidement, mais également dudit second mode de guidage pour ladite phase terminale qui ne sera mise en oeuvre qu'à la fin de cette phase initiale. Par conséquent, l'équipage peut vérifier, dès la commande du mode d'approche mixte, les informations relatives audit second mode de guidage et ainsi anticiper sa mise en oeuvre ultérieure.

Le dispositif conforme à l'invention présente également d'autres avantages. En particulier :
- il évite une action du pilote près du sol, et réduit donc le stress et la charge de travail du pilote près du sol ;
- il permet une harmonisation (avec les autres types d'approche) de la procédure pour le pilote en termes de sélection de l'approche, de surveillance des paramètres de l'approche et d'armement de l'approche, avant le point d'approche finale ; et
- il permet une approche et une transition plus douces (entre les modes RNP et xLS précisés ci-dessous), ce qui augmente le confort des passagers et du pilote.

Dans un mode de réalisation préféré, ledit système de commande, par exemple un système d'affichage et de contrôle multifonction de type MCDU ("Multipurpose Control Display Unit" en anglais), comporte une pluralité de moyens de commande, par exemple des boutons-poussoirs, dont chacun permet de commander l'un d'une pluralité de modes d'approche mixte différents. Dans ce cas, de préférence, ledit système de commande comporte des moyens de commande pour commander respectivement des modes d'approche mixtes qui sont constitués à la fois :
- par un premier mode de guidage permettant de respecter lesdites contraintes de performances, par exemple de type RNP ; et
- respectivement par l'un des seconds modes de guidage suivants : un mode d'approche de précision d'une pluralité de modes d'approche de précision différents ou un mode d'approche de non précision.

Dans le cadre de la présente invention, le dispositif conforme à l'invention peut notamment prendre en compte les modes d'approche de précision suivants :
- un mode d'approche aux instruments, relatif à un système d'atterrissage aux instruments, par exemple de type ILS ("Instrument Landing System" en anglais) ;
- un mode d'approche aux instruments, relatif à un système d'atterrissage à micro-ondes, par exemple de type MLS ("Microwave Landing System" en anglais) ; et
- un mode d'approche aux instruments, relatif à un système d'atterrissage à GPS ("Global Positioning System" en anglais, à savoir système de positionnement global) de type GLS ("Gps Landing System" en anglais).

De plus, un mode d'approche de non précision peut être du type FLS, tel que décrit par exemple dans les brevets FR-2 852 683, FR-2 852 684 et FR-2 852 686.

En outre, dans un mode de réalisation particulier, le dispositif conforme à l'invention est formé de manière à réaliser les opérations, relatives à ladite phase initiale également lors d'une phase de remise des gaz interrompant la phase d'approche en cours. Une telle phase de remise des gaz peut être nécessaire lorsqu'une panne spécifique est détectée ou lorsque le pilote ne peut pas acquérir les références visuelles à la hauteur de décision.

Par ailleurs, de façon avantageuse, ledit système d'affichage comporte un écran de navigation, par exemple de type ND ("Navigation Display" en anglais), et un écran primaire de pilotage, par exemple de type PFD ("Primary Flight Display" en anglais).

De plus, avantageusement, ledit système d'affichage est formé de manière à différencier l'affichage des informations relatives au mode de guidage courant dudit mode d'approche mixte, de l'affichage des informations relatives à l'autre mode de guidage dudit mode d'approche mixte. Cette différentiation peut par exemple être réalisée par l'intermédiaire de couleurs différentes, de luminosités différentes et/ou de graphismes différents.

En outre, de façon avantageuse, ledit système d'affichage est formé de manière à pouvoir afficher :
- des premiers moyens d'indication auxiliaires relatifs à des informations (par exemple lesdites contraintes de performance) concernant ledit premier mode de guidage ;
- des seconds moyens d'indication auxiliaires relatifs à des informations (par exemple l'identification dudit second mode de guidage, une fréquence et un canal utilisés par ce second mode de guidage) concernant ledit second mode de guidage ; et éventuellement
- la position de points de transition latérale et verticale.

Par ailleurs, dans un mode de réalisation particulier, ledit système de calcul comporte :
- un système de gestion de vol, par exemple de type FMS ("Flight Management System" en anglais), pour déterminer lesdites premières déviations latérales et verticales ; et
- un récepteur multimode d'aide à l'atterrissage, par exemple de type MMR ("Multimode Receiver Receiver" en anglais), pour déterminer lesdites secondes déviations latérales et verticales.

En outre, avantageusement, ladite phase terminale commence :
- en ce qui concerne le guidage latéral, au plus tôt lorsque l'aéronef atteint un second point de transition latérale ; et
- en ce qui concerne le guidage vertical, au plus tôt lorsque l'aéronef atteint un second point de transition verticale.

Dans ce cas, avantageusement :
- ladite base de données de navigation comporte des références prédéterminés desdits seconds points de transition latérale et verticale, lorsque le second mode de guidage correspondant à un mode d'approche de précision ; et/ou
- ledit système de calcul calcule directement les références desdits seconds points de transition latérale et verticale, lorsque le second mode de guidage correspondant à un mode d'approche de non précision.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 et 3 sont deux graphiques illustrant schématiquement, respectivement dans le plan vertical et dans le plan horizontal, une phase d'approche telle que considérée dans la présente invention.

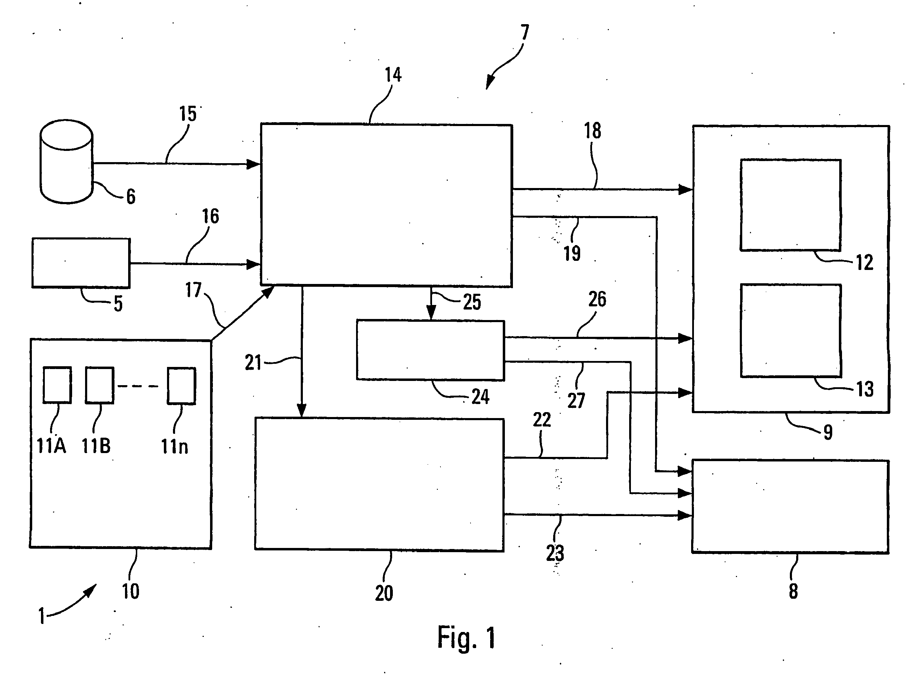

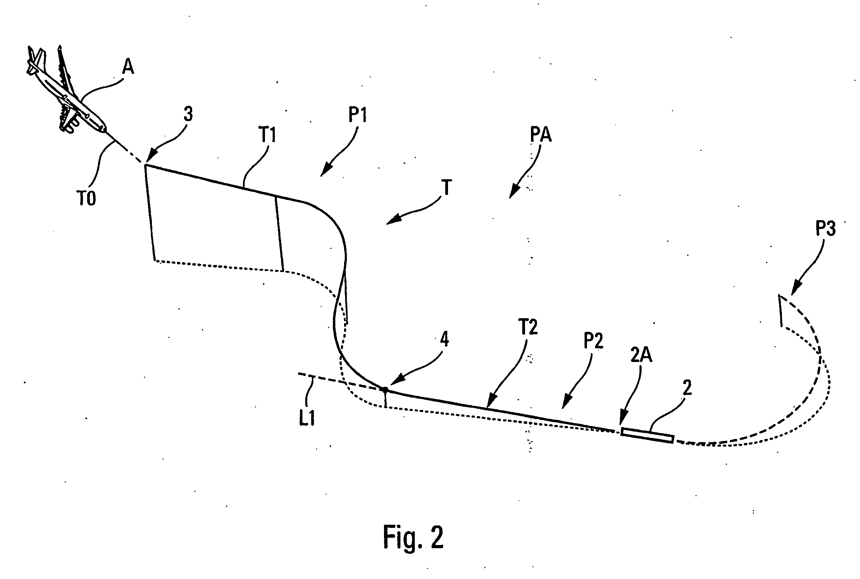

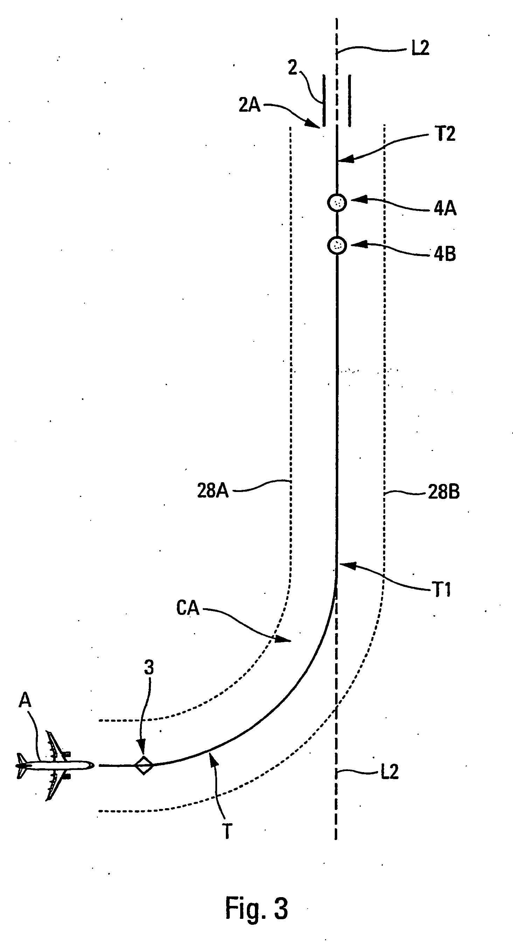

Le dispositif 1 conforme à l'invention et représenté schématiquement sur la figure 1 est destiné à aider au pilotage d'un aéronef A, en particulier d'un avion de transport, lors d'une phase d'approche PA en vue d'un atterrissage sur une piste d'atterrissage 2. Pour ce faire, ledit aéronef A est guidé pendant cette phase d'approche PA le long d'une trajectoire T représentée schématiquement sur les figures 2 et 3 qui sont relatives à un exemple particulier.

Dans le cadre de la présente invention, ladite phase d'approche PA comprend :
- une phase initiale P1 définie entre un point de transition 3 (ou "point d'approche finale") et au moins un autre point de transition 4, pendant laquelle l'aéronef A est guidé suivant un plan de vol prédéterminé en respectant des contraintes de performance de type RNP ("Required Navigation Performance" en anglais) ; et
- une phase terminale P2 définie entre le point de transition 4 et l'atterrissage sur la piste d'atterrissage 2, pendant laquelle l'aéronef A est guidé suivant au moins un axe d'approche L1 représenté schématiquement sur la figure 2.

Ledit dispositif 1 est du type comportant :
- un ensemble 5 de sources d'informations usuelles, qui sont susceptibles de fournir des informations relatives à l'aéronef A, et en particulier sa position courante. A cet effet, ledit ensemble 5 peut notamment comporter des systèmes de références inertielles et des capteurs GPS ;
- une base de données de navigation 6 précisée ci-dessous ;
- un système de calcul 7 susceptible de déterminer :
   ■ une trajectoire de vol T1 relative audit plan de vol pendant ladite phase initiale P1 ;
   ■ des premières déviations latérales et verticales entre la position courante de l'aéronef A et ladite trajectoire de vol T1 pendant ladite phase initiale P1 ;
   ■ ledit axe d'approche L1 ; et
   ■ des secondes déviations latérales et verticales entre la position courante de l'aéronef A et ledit axe d'approche L1 pendant ladite phase terminale P2 ;
- un système de guidage 8 susceptible d'aider au guidage de l'aéronef A ; et
- un système d'affichage 9 précisé ci-dessous.

Ledit système de guidage 8 comporte les moyens suivants, non représentés spécifiquement :
- un moyen de calcul qui est destiné à déterminer de façon usuelle des consignes de pilotage ;
- au moins un moyen d'aide au pilotage, par exemple un dispositif de pilotage automatique et/ou un directeur de vol, qui détermine à partir des consignes de pilotage reçues dudit moyen de calcul des ordres de pilotage de l'aéronef ; et
- des moyens d'actionnement d'organes commandés, tels que par exemple des gouvernes (de direction, de profondeur, ...) de l'aéronef, auxquels on applique les ordres de pilotage ainsi déterminés.

Selon l'invention, ledit dispositif 1 comporte de plus au moins un système de commande 10, par exemple un système d'affichage et de contrôle multifonction de type MCDU ("Multipurpose Control Display Unit" en anglais) et/ou une unité de commande de vol de type FCU ("Flight Control Unit" en anglais), qui comporte une pluralité de moyens de commande 11A, 11B, ..., 11n. Chacun desdits moyens de commande 11A, 11B, 11n permet au pilote de l'aéronef A de commander un mode d'approche mixte particulier qui comprend :
- un premier mode de guidage, pour guider l'aéronef A latéralement et verticalement pendant ladite phase initiale P1 ; et
- un second mode de guidage, pour guider l'aéronef A latéralement et verticalement pendant ladite phase terminale P2.

Plus précisément, lesdits modes d'approche mixtes sont constitués :
- par un premier mode de guidage permettant de respecter lesdites contraintes de performances, de préférence de type RNP, afin notamment de maintenir l'aéronef A dans un couloir aérien CA qui est délimité par des lignes 28A et 28B sur la figure 3 ; et
- respectivement par l'un des seconds modes de guidage suivants :
   ■ un mode d'approche de précision d'une pluralité de modes d'approche de précision différents qui utilisent à chaque fois des informations reçues du sol ;
   ■ un mode d'approche de non précision qui utilise uniquement des informations disponibles à bord de l'aéronef A.

Dans le cadre de la présente invention, le dispositif 1 conforme à l'invention peut notamment prendre en compte les modes d'approche de précision suivants :
- un mode d'approche aux instruments, relatif à un système d'atterrissage aux instruments, par exemple de type ILS ("Instrument Landing System" en anglais), tel que décrit par exemple dans le brevet FR-2 852 685 ;
- un mode d'approche aux instruments, relatif à un système d'atterrissage à micro-ondes, par exemple de type MLS ("Microwave Landing System" en anglais) ; et
- un mode d'approche aux instruments, relatif à un système d'atterrissage à GPS ("Global Positioning System" en, anglais, à savoir système de positionnement global) de type GLS ("Gps Landing System" en anglais).

Ainsi, les différents modes d'approche mixtes peuvent être tous désignés sous la forme "RNP/xLS", xLS représentant de façon générale l'un des modes d'approche ILS, MLS, GLS et FLS précités.

En outre, selon l'invention :
- ledit système de calcul 7 est formé de manière à déterminer, dès l'actionnement d'un desdits moyens de commande 11A, 11B, 11n dudit système de commande 10, à la fois lesdites premières et secondes déviations (latérales et verticales) qui sont relatives respectivement audit premier et second modes de guidage RNP et xLS dudit mode d'approche mixte RNP/xLS particulier ainsi commandé. Bien entendu, ledit système de calcul 7 détermine ces premières et secondes déviations uniquement à partir du moment où les informations nécessaires à cet effet sont disponibles à bord de l'aéronef A. Ceci concerne en particulier l'axe d'approche L1 qui est utilisé pour déterminer lesdites secondes déviations et qui doit pouvoir être détecté à partir de l'aéronef A ;
- ledit système de guidage 8 est formé de manière à aider à guider l'aéronef A, en cas d'actionnement dudit système de commande 10, à la fois pendant ladite phase initiale P1 entre lesdits points de transition 3 et 4, conformément audit premier mode de guidage, et pendant ladite phase terminale P2 à partir dudit point de transition 4, conformément audit second mode de guidage. La transition entre lesdits premier et second modes de guidage est réalisée automatiquement par ledit système de guidage 8 ; et
- ledit système d'affichage 9 est formé de manière à afficher, sur au moins un écran de visualisation 12, 13, dès l'actionnement dudit système de commande 10, au moins les moyens d'indication (réalisés par exemple sous forme d'un symbole graphique, d'une mention alphanumérique, ...) non représentés suivants :
   ■ un moyen d'indication indiquant ledit mode d'approche mixte RNP/xLS commandé ;
   ■ un moyen d'indication indiquant, le cas échéant, au moins le mode de guidage courant dudit mode d'approche mixte commandé ; et
   ■ des moyens d'indication représentatifs respectivement desdites premières et secondes déviations (à la fois latérales et verticales).

En outre, dans un mode de réalisation particulier, le dispositif 1 conforme à l'invention est formé de manière à réaliser les opérations relatives à ladite phase initiale P1 de façon similaire lors d'une phase P3 de remise des gaz (interrompant la phase d'approche en cours) qui est représentée en traits interrompus sur la figure 2. Une telle phase P3 de remise des gaz peut être nécessaire lorsqu'une panne spécifique est détectée ou lorsque le pilote ne peut pas acquérir les références visuelles à une hauteur de décision prédéterminée.

Par ailleurs, ledit système d'affichage 9 comporte notamment un écran de navigation 12, par exemple, de type ND ("Navigation Display" en anglais), et un écran primaire de pilotage 13, par exemple de type PFD ("Primary Flight Display" en anglais). De plus, ce système d'affichage 9 est formé de manière à différencier l'affichage des informations relatives au mode de guidage courant (par exemple ledit premier mode de guidage) dudit mode d'approche mixte, de l'affichage des informations relatives à l'autre mode de guidage (par exemple ledit second mode de guidage) dudit mode d'approche mixte. Cette différentiation peut, par exemple, être réalisée par l'intermédiaire de couleurs différentes, de luminosités différentes et/ou de graphismes différents.

En outre, dans un mode de réalisation particulier, ledit système d'affichage 9 est formé de manière à pouvoir afficher :
- des premiers moyens d'indication auxiliaires relatifs à des informations. (par exemple lesdites contraintes de performance) concernant ledit premier mode de guidage ; et
- des seconds moyens d'indication auxiliaires relatifs à des informations (par exemple l'identification dudit second mode de guidage, une fréquence et un canal utilisés par ce second mode de guidage) concernant ledit second mode de guidage.

Par ailleurs, dans un mode de réalisation particulier, ledit système de calcul 7 comporte :
- un système de gestion de vol 14, par exemple de type FMS ("Flight Management System" en anglais), qui est destiné à déterminer lesdites premières déviations latérales et verticales. Ce système 14 peut être relié par l'intermédiaire de liaisons 15, 16, 17, 18 et 19 respectivement à ladite base de données de navigation 6, audit ensemble 5 et auxdits systèmes 10, 9 et 8 ;
- un récepteur multimode d'aide à l'atterrissage 20, par exemple de type MMR ("Multi Mode Receiver" en anglais), qui est destiné à déterminer lesdites secondes déviations latérales et verticales. Ce récepteur 20 peut être relié par l'intermédiaire de liaisons 21, 22 et 23 respectivement auxdits systèmes 14, 9 et 8 ; et
- un moyen de gestion de guidage 24, par exemple de type FGS ("Flight Guidance System" en anglais) qui est destiné à gérer les différents modes de guidage, incluant les transitions. Ce moyen 24 peut être relié par l'intermédiaire de liaisons 25, 26 et 27 respectivement auxdits systèmes 14, 9 et 8.

Dans le mode de réalisation précité, ledit système de gestion de vol 14 détermine donc, de façon usuelle, lesdites premières déviations latérales et verticales entre la position courante de l'aéronef A et la trajectoire de vol T1 qui est conforme au plan de vol, en particulier à l'aide de ladite position courante reçue dudit ensemble 5 et dudit plan de vol reçu de ladite base de données de navigation 6. De plus, ledit récepteur multimode d'aide à l'atterrissage 20 détermine lesdits secondes déviations latérales et verticales entre la position courante de l'aéronef A (sur la trajectoire T2 suivie pendant la phase terminale P2) et l'axe d'approche L1 représentatif dudit second mode de guidage, à l'aide de ladite position courante reçue dudit ensemble 5 via le système de gestion de vol 14 et dudit axe d'approche L1 qui est par exemple reçue dudit système de gestion de vol 14. Dans l'exemple de la figure 2, la trajectoire T2 effectivement suivie est alignée sur l'axe d'approche L1, lesdites secondes déviations latérales et verticales étant très faibles. Dans un premier mode de réalisation, ledit axe d'approche L1 unique peut être utilisé pour guider l'aéronef A latéralement et verticalement en permettant de déterminer lesdites secondes déviations latérales et verticales, tandis que, dans un second mode de réalisation, ledit axe d'approche L1 peut être utilisé pour guider l'aéronef A uniquement verticalement en permettant de déterminer lesdites secondes déviations verticales. Dans ce second mode de réalisation, l'aéronef A peut être guidé latéralement par rapport à un second axe d'approche (par exemple l'axe L2 de la figure 3) permettant de déterminer lesdites secondes déviations latérales.

On notera que :
- dans le cadre d'une approche de précision, ledit axe d'approche L1 est généralement mis en évidence par au moins un émetteur situé au sol et est détecté à bord de l'aéronef, à l'aide d'au moins un capteur usuel faisant par exemple partie dudit récepteur 20 ; et
- dans le cadre d'une approche de non précision, ledit axe d'approche L1 est calculé, de façon usuelle, par ledit système de gestion de vol 14.

On notera que, dans le cadre de la présente invention, on considère que la commande d'un mode d'approche mixte particulier (par l'actionnement d'un moyen de commande 11A, 11B, 11n du système de commande 10) correspond :
- soit à l'engagement direct dudit mode d'approche mixte ;
- soit à l'armement dudit mode d'approche mixte qui s'engagera automatiquement, lorsque d'autres conditions particulières seront réunies.

Dans une première variante de réalisation dudit dispositif. 1, on peut prévoir que :
- le système de gestion de vol 14 fournit le plan de vol au moyen de gestion de guidage 24 ;
- l'ensemble 5 fournit la position courante de l'aéronef A audit moyen de gestion de guidage 24 ; et
- ledit moyen de gestion de guidage 24 calcule lesdites premières déviations latérales et verticales qu'il transmet auxdits système 8 et 9.

Dans cette première variante, les autres fonctions précitées sont inchangées.

Par ailleurs, dans une seconde variante, on peut prévoir que l'ensemble 5 de sources d'informations fournit directement au récepteur 20 la position courante de l'aéronef A.

On notera que dans un mode de réalisation préféré, ladite phase terminale P2 commence, comme représenté sur la figure 3 :
- en ce qui concerne le guidage latéral, au plus tôt lorsque l'aéronef A atteint un point de transition latérale 4A ; et
- en ce qui concerne le guidage vertical, au plus tôt lorsque l'aéronef A atteint un point de transition verticale 4B.

Dans une telle situation :
- lors d'un mode d'approche de précision, ladite base de données de navigation 6 comporte des références prédéterminées desdits points de transition latérale et verticale 4A et 4B, qui sont utilisées par le second mode de guidage correspondant à ce mode d'approche de précision ; et
- lors d'un mode d'approche de non précision, ledit système de calcul 7 calcule directement les références desdits points de transition latérale et verticale 4A et 4B, qui sont utilisées par le second mode de guidage correspondant à ce mode d'approche de non précision.

Ainsi, grâce au dispositif 1 conforme à l'invention :
- la transition entre les premier et second modes de guidage (c'est-à-dire entre les guidages relatifs respectivement auxdites phases initiale et terminale P1 et P2) est réalisée automatiquement par le système de guidage 8. Ceci permet d'obtenir une transition simple et efficace entre la phase initiale P1 et la phase terminale P2 de ladite phase d'approche PA ; et
- l'équipage de l'aéronef A est informé, dès la commande (armement ou engagement) d'un mode d'approche mixte, à la fois de cette commande, ainsi que des déviations relatives à la fois aux premier et second modes de guidage dudit mode d'approche mixte commandé.

Ainsi, l'équipage de l'aéronef A est immédiatement informé des déviations latérales et verticales, non seulement dudit premier mode de guidage pour la phase initiale P1 qui est mise en oeuvre à ce moment (ou sera mise en oeuvre très rapidement), mais également dudit second mode de guidage pour ladite phase terminale P2 qui ne sera mise en oeuvre qu'à la fin de cette phase initiale P1. Par conséquent, l'équipage peut vérifier, dès la commande du mode d'approche mixte, les informations relatives audit second mode de guidage, et ainsi anticiper sa mise en oeuvre ultérieure.

Le dispositif 1 conforme à l'invention présente également d'autres avantages. En particulier :
- il évite une action du pilote près du sol, et réduit donc le stress et la charge de travail du pilote près du sol ;
- il permet une harmonisation (avec les autres types d'approche) de la procédure pour le pilote en termes de sélection de l'approche, de surveillance des paramètres de l'approche et d'armement de l'approche, avant le point d'approche finale ; et
- il permet une approche et une transition plus douces (entre les modes RNP et xLS), ce qui entraîne un meilleur confort des passagers et du pilote.

On décrit ci-après une approche particulière réalisée par un aéronef A comprenant une phase d'approche PA de type précité, ainsi qu'une phase P3 de remise des gaz, c'est-à-dire sans atterrissage effectif. Bien entendu, une telle approche avec remise des gaz est très rare dans la pratique, mais elle permet de bien préciser les différentes caractéristiques de la présente invention.

Comme représenté sur les figures 2 et 3, l'aéronef A vole vers le point de transition 3 (ou "point d'approche finale"), la long d'une trajectoire usuelle T0, soit en suivi de plan de vol (mode managé) géré par le système de gestion de vol 14, soit en suivi de consigne (mode sélecté). Lorsque le contrôleur aérien donne l'autorisation à l'équipage de l'aéronef A de débuter l'approche finale selon ladite phase d'approche PA, le pilote arme le mode d'approche mixte choisi, par une action sur le moyen d'actionnement 11A, 11B, 11n correspondant du système d'actionnement 10. Dans l'exemple considéré, le pilote sélectionne une approche RNP/ILS. Bien entendu, le même scénario reste valable pour une approche RNP/GLS, RNP/MLS ou RNP/FLS.

En réponse à cette sélection, l'écran de navigation 12 affiche le nom de l'approche mixte sélectionnée, ainsi que la contrainte RNP courante à respecter qui est, par exemple, visualisée en bas et au centre de cet écran 12. Une erreur de guidage FTE peut également être affichée, par exemple à côté d'un symbole illustrant l'aéronef A. De plus, le dispositif 1 affiche les informations RNP/xLS (RNP/ILS dans l'exemple considéré) sur l'écran primaire de pilotage 13, mais ne modifie pas les modes de guidage en cours. Cette sélection entraîne également l'affichage de l'axe ILS (axe d'approche L1) sur l'écran de navigation 12.

Ainsi, à travers un seul actionnement d'un moyen de commande 11A, 11B, 11n, le dispositif 1 conforme à l'invention présente une pluralité d'informations. Ces informations incluent, par exemple, les déviations latérales et verticales par rapport au plan de vol et par rapport à l'axe d'approche L1, la fréquence et le canal xLS, l'identification du moyen xLS, la distance au seuil 2A de la piste d'atterrissage 2, une dague de course sur une échelle de cap, une échelle de contrainte RNP latérale, et éventuellement une échelle de contrainte RNP verticale.

Au séquencement du point 3, ledit premier mode de guidage dudit mode d'approche mixte commandé s'engage automatiquement, et le second mode de guidage pour la phase terminale P2 s'arme automatiquement.

L'approche finale continue jusqu'au séquencement d'un point commun de transition latérale/verticale 4 (figure 2) ou d'un point de transition latérale 4A tel que représenté sur la figure 3. Ce point de transition latérale 4A est publié sur une carte à la disposition de l'équipage et est codé dans la base de données de navigation 6. A partir de ce point 4A, la précision xLS (à 95%) est meilleure que celle requise par les contraintes RNP (à 95%). Donc, il est possible de passer à un guidage xLS (second mode de guidage). Un mode LOC usuel relatif à ce guidage ILS s'engage alors, et l'échelle de déviation latérale affichée jusqu'à présent devient une échelle xLS pure. Les informations relatives au plan vertical sont inchangées.

Ensuite, lorsqu'un point de transition verticale 4B (qui est également publié sur la carte à la disposition de l'équipage et qui est également codé dans la base de données de navigation 6) est séquencé, un mode GLIDE relatif audit second mode de guidage (guidage ILS) s'engage, et l'échelle de déviation verticale devient une échelle xLS pure.

De façon usuelle, dans cet exemple, le mode LOC est destiné à guider latéralement l'aéronef A suivant un faisceau d'alignement latéral (ou faisceau LOC), par exemple le faisceau L2 de la figure 3 qui illustre l'axe longitudinal central de la piste d'atterrissage 2, et le mode GLIDE est destiné à guider verticalement l'aéronef A suivant un faisceau de guidage vertical (ou faisceau GLIDE), par exemple le faisceau L1 de la figure 2.

Les deux points de transition latérale et verticale 4A, 4B (ou l'unique point de transition latérale/verticale 4 précité) représentent des points d'engagement des modes (latéral et vertical) du guidage xLS, au plus tôt. En effet, en fonction de divers critères (distance aéronef A / seuil 2A, angle d'interception, vitesse, ...), leur engagement peut se produire plus tard.

Si à une hauteur de décision prédéterminée, le pilote de l'aéronef A ne peut pas acquérir les références visuelles nécessaires à l'atterrissage sur la piste d'atterrissage 2, ou si une panne le contraint à une remise des gaz, le mode de guidage latéral de suivi du plan de vol s'engage, et l'aéronef A met en oeuvre une phase P3 telle que représentée sur la figure 2. De plus, les déviations par rapport au plan de vol géré par ledit système de gestion de vol 14 et l'échelle RNP (si la procédure de remise des gaz est codée RNP) sont réaffichées. Les informations xLS restent affichées tant qu'elles sont valides (signal de la station sol reçu), car le moyen xLS reste sélectionné.

## Revendications

1. Dispositif d'aide au pilotage d'un aéronef lors d'une phase d'approche en vue d'un atterrissage, ladite phase d'approche (PA) présentant :
- une phase initiale (P1) définie entre un premier point de transition (3) et au moins un second point de transition (4 ; 4A, 4B), pendant laquelle l'aéronef (A) est guidé suivant un plan de vol prédéterminé en respectant des contraintes de performance ; et
- une phase terminale (P2) définie entre ce second point de transition (4 ; 4A, 4B) et l'atterrissage, pendant laquelle l'aéronef (A) est guidé suivant un axe d'approche (L1),
ledit dispositif comportant :
- un ensemble (5) de sources d'informations susceptibles de fournir des informations relatives à l'aéronef (A) et notamment sa position courante ;
- une base de données de navigation (6) ;
- un système de calcul (7) susceptible de déterminer :
■ une trajectoire de vol (T1) relative audit plan de vol ;
■ des premières déviations latérales et verticales entre la position courante de l'aéronef (A) et ladite trajectoire de vol (T1) ;
■ ledit axe d'approche (L1) ; et
■ des secondes déviations latérales et verticales entre la position courante de l'aéronef (A) et ledit axe d'approche (L1) :
- un système de guidage (8) susceptible d'aider au guidage de l'aéronef ; et
- un système d'affichage (9),
**caractérisé en ce que** :
- ledit dispositif (1) comporte, der plus, un système de commande (10) comportant au moins un moyen de commande (11A, 11B, 11n) actionnable, permettant à un pilote de l'aéronef de commander un mode d'approche mixte comprenant un premier mode de guidage pour guider l'aéronef (A) pendant ladite phase initiale (P1) et un second mode de guidage pour guider l'aéronef (A) pendant ladite phase terminale (P2) ;
- ledit système de calcul (7) est formé de manière à déterminer, dès l'actionnement dudit moyen de commande (11A, 11B, 11n), à la fois lesdites premières et secondes déviations, relatives audit mode d'approche mixte commandé, et ceci dès que toutes les informations nécessaires à cet effet sont disponibles à bord de l'aéronef (A) ;
- ledit système de guidage (8) est formé de manière à aider à guider l'aéronef (A), en cas d'actionnement dudit moyen de commande (11A, 11B, 11n), à la fois pendant ladite phase initiale (P1) entre lesdits premier et second points de transition, conformément audit premier mode de guidage, et pendant ladite phase terminale (P2) à partir dudit second point de transition, conformément audit second mode de guidage, la transition entre lesdits premier et second modes de guidage étant réalisée automatiquement par ledit-système de guidage (8) ; et
- ledit système d'affichage (9) est formé de manière à afficher, sur au moins un écran de visualisation (12, 13), dès l'actionnement, dudit moyen de commande (11A, 11B, 11n), au moins :
■ un moyen d'indication indiquant ledit mode d'approche mixte commandé ;
■ un moyen d'indication indiquant le cas échéant au moins le mode de guidage courant dudit mode d'approche mixte commandé ; et
■ des moyens d'indication représentatifs respectivement desdites premières et secondes déviations, et ceci dès qu'elles sont disponibles.

2. Dispositif selon la revendication 1,
**caractérisé en ce que** ledit système de commande (10) comporte une pluralité de moyens de commande (11A, 11B, 11n), dont chacun permet de commander l'un d'une pluralité de modes d'approche mixte différents.

3. Dispositif selon la revendication 2,
**caractérisé en ce que** ledit système de commande (10) comporte des moyens de commande (11A, 11B, 11n) pour commander respectivement des modes d'approche mixtes qui sont constitués à la fois :
- par un premier mode de guidage permettant de respecter lesdites contraintes de performances ; et
- respectivement par l'un des seconds modes de guidage suivants : un mode d'approche de précision d'une pluralité de modes d'approche de précision différents ou un mode d'approche de non précision.

4. Dispositif selon l'une quelconque des revendications précédentes,
**caractérisé en ce qu'**il est formé de manière à réaliser les opérations relatives à ladite phase initiale (P1) également lors d'une phase (P3) de remise des gaz interrompant la phase d'approche en cours.

5. Dispositif selon l'une quelconque des revendications précédentes,
**caractérisé en ce que** ledit système d'affichage (9) comporte un écran de navigation (12) et un écran primaire de pilotage (13).

6. Dispositif selon l'une quelconque des revendications précédentes,
**caractérisé en ce que** ledit système d'affichage (9) est formé de manière à différencier l'affichage des informations relatives au mode de guidage courant dudit mode d'approche mixte, de l'affichage des informations relatives à l'autre mode de guidage dudit mode d'approche mixte.

7. Dispositif selon l'une quelconque des revendications précédentes,
**caractérisé en ce que** ledit système d'affichage (9) est formé de manière à pouvoir afficher :
- des premiers moyens d'indication auxiliaires relatifs à des informations concernant ledit premier mode de guidage ; et
- des seconds moyens d'indication auxiliaires relatifs à des informations concernant ledit second mode de guidage.

8. Dispositif selon la revendication 7,
**caractérisé en ce que** ledit système d'affichage (9) est formé de manière à pouvoir également afficher la position de points de transition latérale et verticale (4A, 4B).

9. Dispositif selon l'une quelconque des revendications précédentes,
**caractérisé en ce que** ledit système de calcul (7) comporte :
un système de gestion de vol (14) pour déterminer lesdites premières déviations ; et
- un récepteur multimode d'aide à l'atterrissage (20) pour déterminer lesdites secondes déviations.

10. Dispositif selon l'une quelconque des revendications précédentes,
**caractérisé en ce que** ladite phase terminale (P2) commence :
en ce qui concerne le guidage latéral, au plus tôt lorsque l'aéronef (A) atteint un second point de transition latérale (4A) ; et
- en ce qui concerne le guidage vertical, au plus tôt lorsque l'aéronef (A) atteint un second point de transition verticale (4B).

11. Dispositif selon la revendication 10,
**caractérisé en ce que** ladite base de données de navigation (6) comporte des références prédéterminées desdits seconds points de transition latérale et verticale (4A, 4B) pour un second mode de guidage correspondant à un mode d'approche de précision.

12. Dispositif selon la revendication 10,
**caractérisé en ce que** ledit système de calcul (7) calcule directement les références desdits seconds points de transition latérale et verticale (4A, 4B) pour un second mode de guidage correspondant à un mode d'approche de non précision.

13. Aéronef,
**caractérisé en ce qu'**il comporte un dispositif d'aide au pilotage (1) tel que celui spécifié sous l'une quelconque des revendications 1 à 12.

## Claims

1. A device to assist with flying an aircraft during an approach phase with a view to landing, said approach phase (PA) exhibiting:
- an initial phase (P1) defined between a first transition point (3) and at least one second transition point (4; 4A, 4B), during which phase the aircraft (A) is guided according to a predetermined flight plan observing the required navigation performance; and
- a terminal phase (P2) defined between this second transition point (4; 4A, 4B) and the landing, during which phase the aircraft (A) is guided along a line of approach (L1),
said device comprising:
- a collection (5) of information sources capable of supplying information relating to the aircraft (A) and particularly relating to its current position;
- a navigation database (6);
- a calculation system (7) capable of determining:
• a flight path (T1) relative to said flight plan;
• first lateral and vertical deviations between the current position of the aircraft (A) and said flight path (T1);
• said line of approach (T1); and
• second lateral and vertical deviations between the current position of the aircraft (A) and said line of approach (L1);
- a guidance system (8) capable of assisting with guiding the aircraft; and
- a display system (9),
**characterized in that**:
- said device (1) additionally comprises a control system (10) comprising at least one actuatable control means (11A, 11B, 11n) allowing a pilot of the aircraft to instigate a hybrid approach mode comprising a first guidance mode for guiding the aircraft (A) during said initial phase (P1) and a second guidance mode for guiding the aircraft (A) during said terminal phase (P2);
- said calculation system (7) is formed in such a way as to determine, as soon as said control means (11A, 11B, 11n) is actuated, both said first and second deviations relative to said instigated hybrid approach mode and to do so as soon as all the information needed to do so becomes available onboard the aircraft (A);
- said guidance system (8) is formed in such a way as to assist with guiding the aircraft (A), if said control means (11A, 11B, 11n) is actuated, both during said initial phase (P1) between said first and second transition points in accordance with said first guidance mode, and during said terminal phase (P2) from said second transition point onwards, according to said second guidance mode, the transition between said first and second guidance modes being performed automatically by said guidance system (8); and
- said display system (9) is formed in such a way as to display, on at least one display screen (12, 13), as soon as said control means (11A, 11B, 11n) is actuated, at least:
• an indication means indicating said hybrid approach mode instigated;
• an indication means indicating, as appropriate, at least the current guidance mode of said instigated hybrid approach mode; and
• indication means respectively representative of said first and second deviations, this being as soon as these become available.

2. The device as claimed in claim 1,
**characterized in that** said control system (10) comprises a plurality of control means (11A, 11B, 11n) each of which can be used to instigate one of a plurality of different hybrid approach modes.

3. The device as claimed in claim 2,
**characterized in that** said control system (10) comprises control means (11A, 11B, 11n) for respectively instigating hybrid approach modes which consist simultaneously:
- of a first guidance mode allowing said required navigational performance to be observed; and
- of respectively one of the following second guidance modes: a precision approach mode from a plurality of different precision approach modes, or a non-precision approach mode.

4. The device as claimed in any one of the preceding claims,
**characterized in that** it is formed in such a way as to perform the operations relating to said initial phase (P1) also during a go-around phase (P3) that interrupts the approach phase in progress.

5. The device as claimed in any one of the preceding claims,
**characterized in that** said display system (9) comprises a navigation display (12) and a primary flight display (13).

6. The device as claimed in any one of the preceding claims,
**characterized in that** said display system (9) is formed in such a way as to differentiate between the displaying of information relating to the current guidance mode of said hybrid approach mode, and the displaying of information relating to the other guidance mode of said hybrid approach mode.

7. The device as claimed in any one of the preceding claims,
**characterized in that** said display system (9) is formed in such a way as to be able to display:
- first auxiliary indication means relating to information regarding said first guidance mode; and
- second auxiliary indication means relating to information regarding said second guidance mode.

8. The device as claimed in claim 7,
**characterized in that** said display system (9) is formed in such a way as to be able also to display the position of lateral and vertical transition points (4A, 4B).

9. The device as claimed in any one of the preceding claims,
**characterized in that** said calculation system (7) comprises:
- a flight management system (14) for determining said first deviations; and
- a landing assistance multimode receiver (20) for determining said second deviations.

10. The device as claimed in any one of the preceding claims,
**characterized in that** said terminal phase (P2) begins:
- as far as lateral guidance is concerned, when the aircraft (A) reaches a second lateral transition point (4A) at the earliest; and
- as far as vertical guidance is concerned, when the aircraft (A) reaches a second vertical transition point (4B) at the earliest.

11. The device as claimed in claim 10,
**characterized in that** said navigation database (6) comprises predetermined references of said second lateral and vertical transition points (4A, 4B) for a second guidance mode corresponding to a precision approach mode.

12. The device as claimed in claim 10,
**characterized in that** said calculation system (7) directly calculates the references of said second lateral and vertical transition points (4A, 4B) for a second guidance mode corresponding to a non-precision approach mode.

13. An aircraft,
**characterized in that** it comprises a flight assistance device (1) like the one specified in any one of claims 1 to 12.

## Patentansprüche

1. Vorrichtung zur Unterstützung der Steuerung eines Flugzeugs in einer Landeanflugphase im Hinblick auf eine Landung, wobei die Anflugphase (PA) Folgendes aufweist:
- eine zwischen einem ersten Übergangspunkt (3) und mindestens einem zweiten Übergangspunkt (4, 4A, 4B) definierte Anfangsphase (P1), während der das Flugzeug (A) unter Einhaltung der Beschränkungen der Flugleistung einem vorgegebenen Flugplan folgend geführt wird und
- eine zwischen diesem zweiten Übergangspunkt (4, 4A, 4B) und der Landung definierte Endphase (P2), während der das Flugzeug (A) einer Anfluglinie (L1) folgend geführt wird,
wobei die Vorrichtung Folgendes umfasst:
- eine Gruppe (2) von Informationsquellen, die geeignet sind, Informationen über das Flugzeug (A) und insbesondere über seine aktuelle Position bereitzustellen,
- eine Navigationsdatenbasis (6),
- ein Rechensystem (7), geeignet zur Bestimmung:
• einer auf den Flugplan bezogenen Flugbahn (T1),
• erster lateraler und vertikaler Abweichungen zwischen der aktuellen Position des Flugzeugs (A) und der Flugbahn (T1),
• der Anfluglinie (L1) und
• zweiter lateraler und vertikaler Abweichungen zwischen der aktuellen Position des Flugzeugs (A) und der Anfluglinie (L1),
- ein Führungssystem (8), das geeignet ist, die Führung des Flugzeugs zu unterstützen und
- ein Anzeigesystem (9),
**dadurch gekennzeichnet, dass**:
- die Vorrichtung (1) außerdem ein Steuerungssystem (10) mit mindestens einem betätigbaren Steuerungsmittel (11A, 11B, 11n) umfasst, das es einem Piloten des Flugzeugs ermöglicht, einen gemischten Anflugmodus anzusteuern, der einen ersten Führungsmodus zum Führen des Flugzeugs (A) während der Anfangsphase (P1) und einen zweiten Führungsmodus zum Führen des Flugzeugs (A) während der Endphase (P2) umfasst,
- das Rechensystem (7) dazu eingerichtet ist, unmittelbar nach Betätigung des Steuerungsmittels (11A, 11B, 11n) sowohl die ersten als auch die zweiten Abweichungen bezüglich des angesteuerten gemischten Anflugmodus zu bestimmen und zwar sobald alle hierfür notwendigen Informationen an Bord des Flugzeugs (A) verfügbar sind,
- das Führungssystem (8) dazu eingerichtet ist, bei Betätigung des Steuerungsmittels (11A, 11B, 11n) das Führen des Flugzeugs (A) sowohl während der Anfangsphase (P1) zwischen dem ersten und zweiten Übergangspunkt entsprechend dem ersten Führungsmodus, als auch während der Endphase (P2) ab dem zweiten Übergangspunkt gemäß dem zweiten Führungsmodus zu unterstützen, wobei der Übergang zwischen dem ersten Führungsmodus und dem zweiten Führungsmodus von dem Führungssystem (8) automatisch vorgenommen wird und
- das Anzeigesystem (9) dazu eingerichtet ist, unmittelbar nach Betätigung des Steuerungsmittels (11A, 11B, 11n) auf mindestens einem Anzeigebildschirm (12, 13) zumindest Folgendes anzuzeigen:
• ein Anzeigemittel, das den angesteuerten gemischten Anflugmodus anzeigt,
• ein Anzeigemittel, das gegebenenfalls mindestens den aktuellen Führungsmodus des angesteuerten gemischten Anflugmodus anzeigt und
• Anzeigemittel, die jeweils repräsentativ für die ersten und zweiten Abweichungen sind und zwar sobald diese verfügbar sind.

2. Vorrichtung nach Anspruch 1,
**dadurch gekennzeichnet, dass** das Steuerungssystem (10) eine Vielzahl von Steuerungsmitteln (11A, 11B, 11n) umfasst, die jeweils das Ansteuern eines von mehreren unterschiedlichen gemischten Anflugmodi ermöglichen.

3. Vorrichtung nach Anspruch 2,
**dadurch gekennzeichnet, dass** das Steuerungssystem (10) Steuerungsmittel (11A, 11B, 11n) umfasst, um jeweils gemischte Anflugmodi anzusteuern, die zugleich bestehen aus:
- einem ersten Führungsmodus, der es ermöglicht, die Beschränkungen der Flugleistung einzuhalten und
- jeweils einem der folgenden zweiten Führungsmodi: ein Präzisionsanflug-Modus aus einer Vielzahl von unterschiedlichen Präzisionsanflug-Modi oder ein Nichtpräzisionsanflug-Modus.

4. Vorrichtung nach einem der vorhergehenden Ansprüche,
**dadurch gekennzeichnet, dass** sie dazu eingerichtet ist, die auf die Anfangsphase (P1) bezogenen Maßnahmen auch in einer Durchstartphase (P3), welche die laufende Anflugphase abbricht, durchzuführen.

5. Vorrichtung nach einem der vorhergehenden Ansprüche,
**dadurch gekennzeichnet, dass** das Anzeigesystem (9) ein Navigationsdisplay (12) und ein Primary Flight Display (13) umfasst.

6. Vorrichtung nach einem der vorhergehenden Ansprüche,
**dadurch gekennzeichnet, dass** das Anzeigesystem (9) dazu eingerichtet ist, das Anzeigen der Informationen bezüglich des aktuellen Führungsmodus des gemischten Anflugmodus vom Anzeigen der Informationen bezüglich des anderen Führungsmodus des gemischten Anflugmodus zu unterscheiden.

7. Vorrichtung nach einem der vorhergehenden Ansprüche,
**dadurch gekennzeichnet, dass** das Anzeigesystem (9) dazu eingerichtet ist, Folgendes anzeigen zu können:
- erste Hilfsanzeigemittel bezogen auf Informationen, die den ersten Führungsmodus betreffen und
- zweite Hilfsanzeigemittel bezogen auf Informationen, die den zweiten Führungsmodus betreffen.

8. Vorrichtung nach Anspruch 7,
**dadurch gekennzeichnet, dass** das Anzeigesystem (9) dazu eingerichtet ist, außerdem die Position von lateralen und vertikalen Übergangspunkten (4A, 4B) anzeigen zu können.

9. Vorrichtung nach einem der vorhergehenden Ansprüche,
**dadurch gekennzeichnet, dass** das Rechensystem (7) Folgendes umfasst:
- ein Flugleitsystem (14) zum Bestimmen der ersten Abweichungen und
- einen Multimode-Empfänger zur Landehilfe (20), um die zweiten Abweichungen zu bestimmen.

10. Vorrichtung nach einem der vorhergehenden Ansprüche,
**dadurch gekennzeichnet, dass** die Endphase (P2):
- in Bezug auf die laterale Führung frühestens beginnt, wenn das Flugzeug (A) einen zweiten lateralen Übergangspunkt (4A) erreicht und
- in Bezug auf die vertikale Führung frühestens beginnt, wenn das Flugzeug (A) einen zweiten vertikalen Übergangspunkt (4B) erreicht.

11. Vorrichtung nach Anspruch 10,
**dadurch gekennzeichnet, dass** die Navigationsdatenbasis (6) vorgegebene Referenzen der zweiten lateralen und vertikalen Übergangspunkte (4A, 4B) für einen zweiten Führungsmodus umfasst, der einem Präzisionsanflug-Modus entspricht.

12. Vorrichtung nach Anspruch 10,
**dadurch gekennzeichnet, dass** das Rechensystem (7) die Referenzen der zweiten lateralen und vertikalen Übergangspunkte (4A, 4B) für einen zweiten Führungsmodus, der einem Nichtpräzisionsanflug-Modus entspricht, direkt berechnet.

13. Flugzeug,
**dadurch gekennzeichnet, dass** es eine Vorrichtung (1) zur Unterstützung der Steuerung, wie die unter einem der Ansprüche 1 bis 12 spezifizierte, aufweist.
